# EUROPÄISCHE PATENTSCHRIFT

(11) **EP 2 010 794 B1**
(45) Veröffentlichungstag und Bekanntmachung des Hinweises auf die Patenterteilung: **28.07.2010**
(21) Anmeldenummer: 07727919.8
(22) Anmeldetag: 10.04.2007
(51) Int. Cl.: F16D 55/228

(54) **SCHEIBENBREMSE**
DISK BRAKE
FREIN A DISQUE

(30) Priorität: 20.04.2006 DE 102006018265; 09.02.2007 DE 102007006472
(43) Veröffentlichungstag der Anmeldung: 07.01.2009
(73) Patentinhaber: Continental Teves AG & Co. oHG, 60488 Frankfurt am Main (DE)
(72) Erfinder: BACH, Uwe, 65527 Niedernhausen (DE); SUNDHEIM, Ralf, 60316 Frankfurt/m (DE); VAN AKEN, Volker, 61194 Niddatal (DE)
(86) Internationale Anmeldenummer: PCT/EP2007/053451
(87) Internationale Veröffentlichungsnummer: WO 2007/122100

(56) Entgegenhaltungen:
- EP-A1- 0 412 541
- EP-A2- 1 069 332
- WO-A-00/65247
- DE-A1- 10 233 446
- DE-A1- 19 806 056
- GB-A- 2 258 506
- JP-A- 11 063 041

## Beschreibung

Die Erfindung betrifft eine Scheibenbremse mit einem Bremssattel, der eine drehbare Bremsscheibe U-förmig axial umgreift, und eine Sattelbrücke, zwei Sattelschenkel und mindestens eine Betätigungsvorrichtung umfasst. In dem Bremssattel ist mindestens ein Bremsbelag axial verschiebbar gelagert. Die Sattelbrücke weist in Umfangsrichtung mindestens drei, im Wesentlichen axial verlaufende Träger auf, wobei zwei der Träger als Hauptträger und ein Träger als Zentralträger ausgebildet sind. Diese Träger verbinden die beiden Sattelschenkel, bilden dabei zwei Fenster und überragen axial die Bremsscheibe. Der Zentralträger überragt sowohl die Bremsscheibe als auch den Bremsbelag in Axialrichtung.

Eine derartige Scheibenbremse ist aus der DE 195 30 407 A1 bekannt, die einen Festsattel mit Sattelschenkeln und einer Sattelbrücke aufweist. Die Sattelbrücke ist dabei in Form von als Träger fungierenden Schrauben gebildet, welche die Sattelschenkel verbinden. Derartige Bremsen benötigen einen verhältnismäßig großen Bauraum in Radial- und Umfangsrichtung. Bei einer Scheibenbremse wirkt es sich positiv auf die Bremsleistung und -performance aus, wenn der Radius der Bremsscheibe möglichst groß gewählt wird, da somit ein hohes Bremsmoment bei niedriger Umfangskraft erzielbar ist. Der maximale Durchmesser einer Bremsscheibe und der entsprechende Radius der Beaufschlagung durch die Bremsbeläge werden von dem Felgeninnendurchmesser bestimmt. Weiterhin wird in der DE 101 13 347 A1 eine Scheibenbremse offenbart, bei der die Sattelbrücke in Form von Trägern ausgebildet ist, und ein mittlerer Zentralträger zur Abstützung des Bremsbelags dient.

Aus der EP 0 412 541 A1 ist eine Teilbelag-Scheibenbremse in Schwimmrahmenbauweise bekannt, wobei der Schwimmrahmen Betätigungszylinder trägt und wobei der Schwimmrahmen axial verschiebbar an einem Bremsträger geführt angeordnet ist. Reibbeläge sind mit Bolzen in dem Schwimmrahmen geführt angeordnet. Ein in Umfangsrichtung der Bremsscheibe gemessener Abstand zwischen je zwei auf einer Seite einer Bremsscheibe angeordneter Bremsbacken ist so dimensioniert, dass dieser Abstand mindestens halb so groß ist, wie die in Umfangsrichtung gemessene Belagbreite jedes einzelnen Reibbelags. Dabei sind die Bremsscheibe übergreifende Brückenabschnitte vom Schwimmrahmen stets außerhalb vom Außenradius der Bremsscheibe angeordnet.

Aus der WO 200065247 A1 ist ein Faustsattel für eine Scheibenbremse bekannt, der axial verschiebbar an einem Halter angeordnet ist. Die Bremsbeläge sind in Umfangsrichtung, bezogen auf die Bremsscheibe, festgelegt, sowie mit Hilfe des Faustsattels in Axialrichtung, bezogen auf eine Drehachse der Bremsscheibe, in dem Halter verschiebbar. Der Faustsattel weist keinerlei Träger auf, sondern verfügt über eine fensterfreie, kompakte Sattelbrücke, die die Bremsscheibe sowie die Bremsbeläge übergreift.

Die DE 42 26 196 A1 beschreibt eine Teilbelag-Scheibenbremse in Schwimmrahmenbauweise, wobei der Schwimmrahmen ohne Zentralträger mit einem Fenster gestaltet ist. Die Bremsbeläge sind in einem Bremsträger aufgenommen, der weiterhin eine Bolzenführung zur verschiebbaren Anordnung vom Schwimmrahmen aufweist.

Es ist eine Aufgabe der Erfindung einen Bremscheibe und einen Bremsbelag anzugeben, welche die Nachteile des Stands der Technik vermeiden und insbesondere einen geringen Platzbedarf aufweisen.

Die Aufgabe wird erfindungsgemäß mit den Merkmalen des Kennzeichens des Patentanspruchs 1 dadurch gelöst, indem eine radiale Wandstärke des Zentralträgers der Sattelbrücke derart ausgeprägt ist, dass in einem axialen Bereich der Bremsbeläge ein Abstand zwischen dem Zentralträger und einer Drehachse der Bremsscheibe kleiner ist als ein Außenradius der Bremsscheibe. Dies bedeutet, dass die Wandstärke in dem Bereich, wo der Zentralträger nur den Bremsbelag überragt, größer ist als dort, wo der Zentralträger die Bremsscheibe übergreift. Somit ist der Zentralträger durch die axial projizierte Überschneidung von Bremsscheibe und Zentralträger an dem Übergangsbereich zwischen Sattelschenkel und Sattelbrücke verstärkt. Dies erweist sich als sehr günstig, da in diesem Übergangsbereich die Beanspruchung der Bauteile, insbesondere durch Kerbspannungen, wesentlich stärker ist als in dem Bereich der Bremsscheibe. Diese beanspruchungsgerechte und - optimierte Konzeption der Sattelbrücke bewirkt den Vorteil, dass der Bremsscheibendurchmesser maximal ausgeprägt sein kann. Die Konstruktion der Sattelbrücke mit Trägern und Fenstern ermöglicht eine gute Wärmeabstrahlung der Bauteile, wodurch die thermische Belastung gering gehalten wird.

Dadurch dass die Hauptträger und der Zentralträger die Bremsscheibe in einer Axialrichtung U-förmig umschließen, wird die Bremsscheibe durch den Bremssattel quasi-abgerundet und spannungsharmonisierend umschlossen. Dies führt zu einem optimalen Kraftfluss im Bremssattel und somit zu einer hohen Steifigkeit gegen Aufbiegung bei einer Bremsbetätigung.

Die Bremsbeläge werden an Brückenschenkeln in Umfangsrichtung und in Radialrichtung abgestützt, wobei die Brückenschenkel an den Hauptträgern der Sattelbrücke angeordnet sind. Dabei ist an mindestens einem, bezüglich des Bremsbelags einlaufseitigen Brückenschenkel eine Hinterschneidung vorgesehen. Diese umfasst Anschläge zur Anlage des Bremsbelags in Umfangsrichtung und eine Auflage zur radialen Abstützung des Bremsbelags. Der Bremsbelag umfasst eine Rückenplatte und einen Reibbelag, wobei die Rückenplatte einen Rumpfbereich mit zwei in Umfangsrichtung angrenzenden Vorsprüngen aufweist. Mindestens einer der Vorsprünge ist L-förmig mit einer Abstützfläche zur radialen Abstützung sowie zwei Anlageflächen zur Anlage in Umfangsrichtung ausgebildet. Der L-förmige Vorsprung greift in die Hinterschneidung des Brückenschenkels ein. Diese Art der Lagerung eines Bremsbelages im Bremssattel ist einfach zu fertigen und bedingt ein komfortables Bremsverhalten.

Hinsichtlich des Bedarfs an Bauraum in Umfangsrichtung erweist es sich als sehr günstig, wenn die Hinterschneidung bezüglich einer Hauptdrehrichtung der Bremsscheibe ausschließlich einlaufseitig pro Bremsbelag im Bremssattel vorgesehen ist, und die Rückenplatte ausschließlich einlaufseitig einen L-förmigen Vorsprung aufweist, so dass ein Kraftfluss von Umfangskräften aus der Rückenplatte in den Bremssattel über eine Anlagefläche und einen Anschlag gezogen erfolgt, wenn die Bremsscheibe in der Hauptdrehrichtung rotiert, und über einen weiteren Anschlag und einen weiteren Anlagefläche gedrückt erfolgt, wenn sich die Bremsscheibe entgegen der Hauptdrehrichtung dreht. Die Begrifflichkeiten "ein- und auslaufseitig" sind in diesem Zusammenhang auf jeden vorhandenen Bremsbelag bezogen. Durch diese Konzeption der Bremsbelaglagerung wird sichergestellt, dass die gezogene Bremsbelagführung, mit einem günstigen Bremsverhalten bezüglich Geräuschbildung und Verschleiß für die Vorwärtsfahrt des Fahrzeugs zum tragen kommt. Für die weniger häufigen Rückwärtsfahrten oder für den Stillstand des Fahrzeugs werden die Bremsbeläge gedrückt belastet. Diese speziell auf die Anforderungen abgestimmte und effektive Anwendung des gezogenen und des gedrückten Belagführungsprinzips, birgt den Vorteil, dass der Bauraum des Bremssattels in Umfangsrichtung der Bremsscheibe erheblich reduziert wird, da keine auslaufseitige Hinterschneidungskonstruktion von Nöten ist. Zusätzlich ergibt sich der Doppeleffekt, dass der Werkstoff- und Bearbeitungsbedarf sowohl bezüglich des Bremssattels als auch bezüglich der Rückenplatte des Bremsbelags entscheidend gesenkt wird. Besonders bei Festsatteln ist dieses Konzept besonders einfach und vorteilhaft, da diese prinzipiell sehr steif ausgebildet sind, und somit die vorliegende reduzierte Belagführung ohne Nachteile anwendbar ist.

Eine vorteilhafte Weiterentwicklung der Erfindung beinhaltet, dass an dem auslaufseitigen Brückenschenkel ein Anschlag und eine Auflage vorgesehen sind, wodurch der Bremsbelag mittels der Abstützflächen radial abstützbar ist. Die zur Abstützung in Umfangsrichtung dienenden Anschläge im Bremssattel sind derart beabstandet sind, so dass, wenn die Bremsscheibe in der Hauptdrehrichtung rotiert, bei bremsungsinduzierten, mäßigen Umfangskräften ausschließlich der einlaufseitige Anschlag der Hinterscheidung und die Anlagefläche des L-förmigen Vorsprungs im Eingriff sind. Bei hohen Umfangskräften liegt zusätzlich der auslaufseitige Vorsprung des Bremsbelags am Anschlag des auslaufseitigen Brückenschenkels an, da sich sowohl der einlaufseitige Brückenschenkel verformt und sich die Rückenplatte des Bremsbelags längt. Ein zwischen Bremsbelag und einem auslaufseitigen Anschlag vorhandener Spalt wird durch die Verformung überwunden, so dass eine Kraftableitung anteilig in den auslaufseitigen Brückenschenkel ermöglicht wird (Pull-Push-Prinzip).

In einer weiteren Ausgestaltung der Erfindung ist an dem Zentralträger der Sattelbrücke eine Abstützfläche vorgesehen, die zusammenwirkend mit den Auflagen in den Brückenschenkeln eine Bewegungsmöglichkeit des Bremsbelags im Bremssattel in Radialrichtung mit einem Spiel begrenzt. Weiterhin ist am Bremsbelag eine mit der Abstützfläche des Zentralträgers zusammenwirkende Rumpfabstützfläche vorgesehen, die an einer der Drehachse der Bremsscheibe abgewandten Seite des Rumpfbereichs und im Wesentlichen mittig zwischen den Vorsprüngen angeordnet ist. Vorzugsweise ist dabei eine Ausnehmung im Bremsbelag vorgesehen, welche den Zentralträger zumindest teilweise aufnimmt und worin die Rumpfabstützfläche angeordnet ist. Die radiale Abstützung des Bremsbelags in einem dritten Punkt in der Sattelbrücke verhindert unerwünschte Bewegungen des Bremsbelags und damit verbundene Nachteile hinsichtlich des Bremskomforts. Die Verwendung der dritten Abstützfläche ist bei dem vorliegenden Führungssystem der Bremsbeläge besonders vorteilhaft, da die einseitige Ausprägung des L-förmigen Vorsprungs dem Bremsbelag gewisse Bewegungsmöglichkeiten gestattet, welche durch die Rumpfabstützfläche und die entsprechende Gegenfläche in der Sattelbrücke eingeschränkt wird. Das radiale Spiel dieser Bremsbelaglagerung kann bei einem Festsattel verhältnismäßig gering gewählt sein, da Sattelbrücke und Auflagen in der Belagführung in einem festen geometrischen Verhältnis stehen. Ein Spiel in der Größenordnung von 0,3 - 0,5 mm ist hierbei sinnvoll. In dem Fall, dass weitere Mittel zwischen dem Bremsbelag und der Sattelbrücke wirksam sein sollten, kann das Spiel zwischen 0,5 - 1 mm betragen.

Eine weitere Ausführungsform der Erfindung beinhaltet, dass im Bremssattel mindestens zwei Paar Bremsbeläge nebeneinander in Umfangsrichtung zur axial beidseitigen Beaufschlagung der Bremscheibe vorgesehen sind. Solche Hochleistungs-Scheibenbremsen weisen den entscheidenden Vorteil gegenüber Bremsen mit nur einem großen Paar Bremsbeläge auf, dass die Bremsbeläge gleichmäßig abgenützt werden, da die Bremsbeläge von nur einer Betätigungsvorrichtung beaufschlagt werden, eine voneinander unabhängige Lagerung aufweisen und thermisch entkoppelt sind. Dadurch ist vor allem die mechanische Beanspruchung der Kraftabstützungen in Umfangsrichtung reduziert, was zu niedrigeren Bauteildimensionen und -gewicht führt. Damit verbessert sich auch die axiale Beweglichkeit im Bremssattel und somit auch die Komforteigenschaften der Bremsbeläge. Die günstige Abstützung der Bremsbeläge mittels der Hinterschneidungen und den Anschlägen macht eine kompakte und kurze Bauweise des Bremssattels, insbesondere in Umfangsrichtung möglich.

Der Bauraum in Umfangsrichtung kann besonders effektiv genutzt werden, wenn die Hinterschneidung zur Aufnahme des auslaufseitigen Bremsbelags an einem zentralen Brückenschenkel vorgesehen ist, woran gleichzeitig auch der Anschlag für den einlaufseitigen Bremsbelag angebracht ist. Das bedeutet, dass der auslaufseitige Anschlag für den einlaufseitigen Bremsbelag an demselben Brückenschenkel angebracht ist, an welchem auch die einlaufseitige Hinterschneidung für den auslaufseitigen Bremsbelag vorgesehen ist. Es gilt zu beachten, dass sich einmal die Begrifflichkeit "ein- und auslaufseitig" zur Positionsangabe der Hinterschneidung und des Anschlags im Bremssattel auf den jeweiligen Bremsbelag bezieht, aber ebenfalls zur Lagebeschreibung der Bremsbeläge verwendet wird und sich dabei auf den Bremssattel per se bezieht. Die Brückenschenkel sind vorzugsweise derart an und mit der Sattelbrücke einstückig ausgebildet, dass Sattelbrücke und Brückenschenkel eine U-förmige Kontur aufweisen, welche die Bremsscheibe umgreift. Dabei können die Sattelbrücke und die Sattelschenkel aus einem Leichtbauwerkstoff und die Sattelbrücke aus einem festeren Werkstoff als die Sattelschenkel hergestellt sein. Da die Sattelbrücke vollständig die Betätigungskräfte abstützen muss, welche von den Betätigungsvorrichtungen eingebracht werden, kann diese aufgrund der günstigen mehrstückigen Konstruktion des Bremssattels aus einem höherfesten Werkstoff, wie zum Beispiel Sphäro-Guss, hergestellt werden. Um das Gewicht zu reduzieren sind die Sattelschenkel beispielsweise aus Aluminium hergestellt.

Weiterhin kann die Steifigkeit des Bremssattels weiter erhöht werden, indem die U-förmige Ausprägung der Sattelbrücke und die Brückenschenkel in die tragende Konstruktion mit einbezogen werden. Indem die Sattelschenkel mit der Sattelbrücke und den Brückenschenkeln an zwei radial unterschiedlichen Stellen verschraubt werden, stützen sich die Betätigungskräfte der Betätigungsvorrichtung auch über die Brückenschenkel ab.

Im Rahmen der vorliegenden Erfindung wir weiterhin ein Bremsbelag für eine Scheibenbremse nach Anspruch 1 offenbart.

Der Bremsbelag weist dabei in der Rückenplatte und im Reibbelag eine Ausnehmung auf, welche den Zentralträger zumindest teilweise aufnimmt. Günstiger Weise kann die Sattelbrücke in einer Umfangsrichtung mindestens drei, im Wesentlichen axial verlaufende Träger aufweisen. Die Träger sind dabei als zwei Hauptträger und ein Zentralträger ausgebildet sind, welche die Sattelschenkel unter Bildung zweier Fenster verbinden und die Bremsscheibe axial überragen. Der Zentralträger überragt zu der Bremsscheibe ebenfalls den Bremsbelag axial und wird von der Ausnehmung in Umfangsrichtung beidseitig aufgenommen.

Weiterhin umfasst der Bremsbelag eine Rückenplatte und einen Reibbelag, wobei die Rückenplatte einen Rumpfbereich mit zwei in Umfangsrichtung angrenzenden Vorsprüngen aufweist. Mindestens ein Vorsprung ist dabei L-förmig mit einer Abstützfläche zur radialen Abstützung, sowie mit zwei Anlageflächen zur Anlage in einer Umfangsrichtung ausgebildet. Der L-förmige Absatz greift in eine Hinterschneidung in der Sattelbrücke ein, wobei der andere Vorsprung eine weitere Anlagefläche und eine Abstützfläche aufweist. Auf diese Weise ermöglicht der Bremsbelag die vorteilhafte und bauraumoptimierte Konzeption des Bremssattels und der Scheibenbremse. Denkbar ist, den L-förmigen Vorsprung bezüglich einer Hauptdrehrichtung der Bremsscheibe ausschließlich einlaufseitig an dem Rumpfbereich jeder Rückenplatte auszubilden. Auf diese Weise wird der Bremsbelag gezogen und der Kraftfluss der Umfangskräfte aus der Rückenplatte in den Bremssattel erfolgt über die Anlagefläche, welche an dem L-förmigen Vorsprung radial verläuft und dem Rumpfbereich zugewandt ist, wenn die Bremsscheibe in der Hauptdrehrichtung rotiert. Wenn sich die Bremsscheibe entgegen der Hauptdrehrichtung dreht, führt der Kraftfluss gedrückt über die Anlagenfläche, die dem Rumpfbereich abgewandt ist. Jedoch kann auch der auslaufseitige Absatz der Rückenplatte eine L-förmige Kontur aufweisen. So werden Umfangskräfte unabhängig von der Drehrichtung der Bremsscheibe gezogen aus dem Bremsbelag in den Bremssattel abgeleitet.

In einer Ausgestaltung der Erfindung kann am Rumpfbereich der Rückenplatte eine Rumpfabstützfläche vorgesehen sein, die zusammenwirkend mit den Abstützflächen der Vorsprünge eine Bewegungsmöglichkeit des Bremsbelags im Bremssattel in Radialrichtung mit einem Spiel begrenzt. Diese als Radialabstützung fungierende Rumpfabstützfläche kann sowohl im Normalbetrieb der Scheibenbremse in Kontakt mit der Sattelbrücke treten, als auch nur als Notfallbegrenzung dienen, insbesondere wenn zwischen Bremsbelag und Sattelbrücke weitere Mittel wirksam sind.

Wenn die Scheibenbremse zwei Paar Bremsbeläge aufweist, wobei jeweils zwei Bremsbeläge in Umfangsrichtung nebeneinander die Bremsscheibe beidseitig beaufschlagen können, so ist es hinsichtlich der Herstellungskosten vorteilhaft, wenn mindestens zwei Bremsbeläge gleich ausgeführt sind.

Die beschriebene Konzeption eines Bremssattels und eines Bremsbelags lassen sich in einer Scheibenbremse mit einem Festsattel oder mit einem Schwimmsattel anwenden.

Weitere Einzelheiten der Erfindung gehen aus den Zeichnungen anhand der Beschreibung hervor.

In den Zeichnungen zeigt
- Fig. 1: eine perspektivische Ansicht auf einen Bremssattel einer ersten Ausführungsform einer Scheibenbremse,
- Fig. 2: eine perspektivische Ansicht in die Sattelbrücke der Scheibenbremse gemäß Fig. 1,
- Fig. 3: einen Längsschnitt durch die Scheibenbremse gemäß Fig. 1,
- Fig. 4: einen perspektivischen Teilschnitt durch die Scheibenbremse gemäß Fig. 1,
- Fig. 5: a) und b) einen Detailschnitt auf die Bremsbelagführung der Scheibenbremse gemäß Fig. 1 und analog der Ausführungsformen in Fig. 7 und Fig. 8.
- Fig. 6: a) einen Querschnitt durch die Scheibenbremse gemäß Fig. 1, und b) einen Querschnitt durch eine Scheibenbremsen ähnlich der Scheibenbremse gemäß Fig. 1,
- Fig. 7: einen Längsschnitt durch eine zweite Ausführungsform einer Scheibenbremse, und
- Fig. 8: einen Längsschnitt durch eine dritte Ausführungsform einer Scheibenbremse.

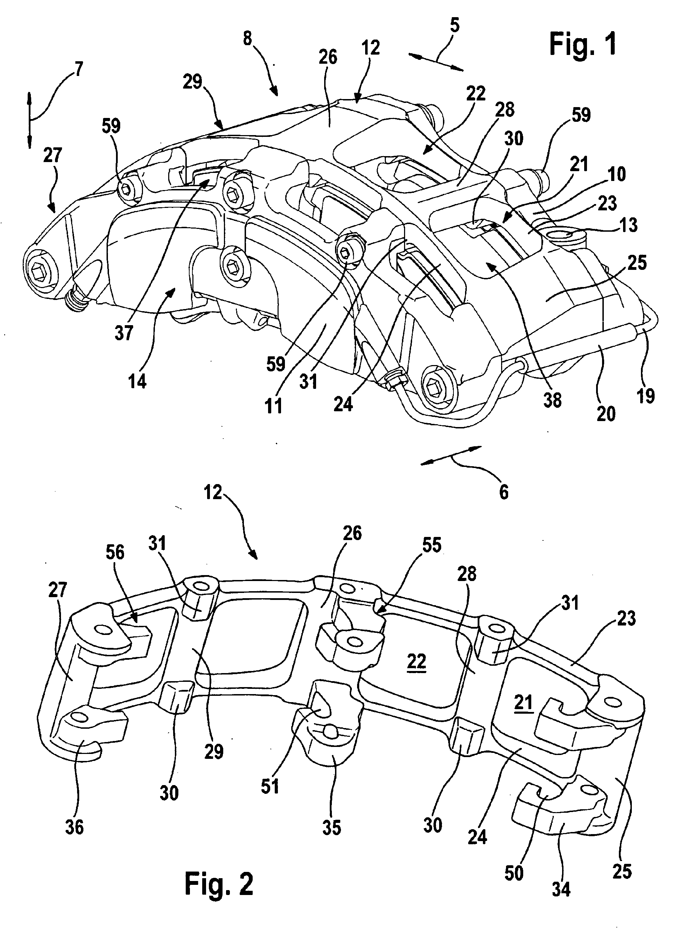

In den Fig. 1 bis Fig. 6 wird eine erste Ausführungsform einer Scheibenbremse 1 gezeigt. Diese Scheibenbremse 1 umfasst einen als Festsattel ausgebildeten Bremssattel 8 der an einen nicht dargestellten Fahrzeugschenkel fest montierbar ist. Im montiertem Zustand umgreift der Bremssattel 8 axial eine Bremsscheibe 2, die um eine Drehachse 3 rotierbar gelagert ist. Dabei läuft die Bremsscheibe 2 durch einen in Umfangsrichtung 5 verlaufenden Schacht 9 durch den Bremssattel 8, wobei der Schacht 9 von einem ersten, Fahrzeug zugewandten Sattelschenkel 10, eine Sattelbrücke 12 und einem zweiten fahrzeugabgewandten Sattelschenkel 11 gebildet wird. Im vorliegenden Fall sind die Sattelschenkel 10,11 und die Sattelbrücke 12 als verschiedenen Bauteile ausgebildet und mittels Schrauben miteinander verbunden. Denkbar ist auch eine einstückige Ausführung des Bremssattels. An dem ersten Sattelschenkel 10 sind im Wesentlichen radial verlaufende Bohrungen 13 vorgesehen, mittels welcher der Bremssattel 8 mit dem Fahrzeugschenkel verbindbar ist.

In jedem Sattelschenkel 10,11 sind je zwei Betätigungsvorrichtungen 14 angeordnet, die jeweils einen in einer Bohrung 15 verschiebbaren Kolben 16 aufweisen. Zwischen den Kolben 16 und den Bohrungen 15 ergeben sich Druckräume 17. Alle vier Druckräume 17 der Betätigungsvorrichtungen 14 sind hydraulisch miteinander verbunden, wobei die Druckräume 17 im selben Sattelschenkel 10 oder 11 mittels einer Stichbohrung 18 in Verbindung stehen, und zudem ein Druckrohr 19 zwischen den Druckräumen 17 der beiden Sattelschenkel 10,11 vorgesehen ist. Dabei wird das Druckrohr 12 durch eine schützende Isolierung 20 gegen thermische und mechanische Belastungen gegenüber der Bremsscheibe 2 abgeschirmt.

Die Sattelbrücke 12 ist als Träger-Rahmenkonstruktion mit radialen Fenstern 21,22 gestaltet, wobei zwei in Umfangsrichtung 5 verlaufende Stege 23,24 mit axial verlaufenden Trägern verbunden sind, und so die Fenster 23,24 umrahmen. Es ist zwischen Hauptträgern 25,26,27 und Zentralträgern 28,29 zu unterscheiden, da die Hauptträger 25,26,27 stärker ausgeprägt sind als die Zentralträger 28,29. Die Hauptträgern 25,26,27 bilden zusammen mit fest verbundenen Brückenschenkeln 34,35,36 U-förmige Einheiten aus, welche die Bremsscheibe 2 umschließen. An den Brückenschenkeln 34,35,36 sind Aufnahmen für die Bremsbeläge 37,38 angeordnet, welche dadurch in Axialrichtung 6 verschiebbar gelagert und in Umfangsrichtung 5 und Radialrichtung 7 gelagert sind. Gemäß einer Hauptdrehrichtung 4 der Bremsscheibe 2, welche der Vorwärtsfahrt eines Kraftfahrzeuges entspricht, ist dabei von jeweils einem ein- und auslaufseitigen Paar Bremsbeläge 37,38 zu sprechen.

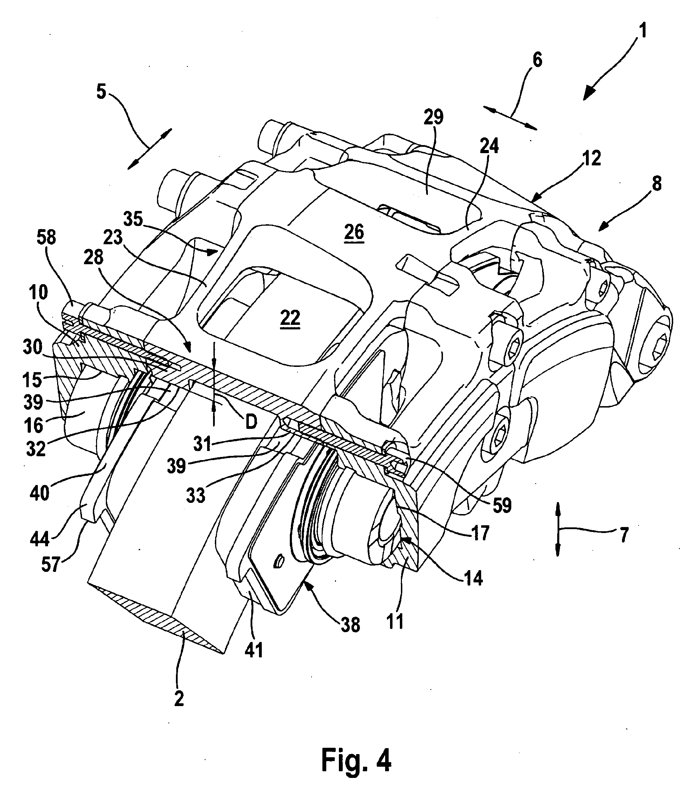

Die Zentralträger 28,29 sind zwischen den Hauptträgern 25,26,27 angeordnet und überragen die Bremsscheibe 2 und die Bremsbeläge 37,38. In Fig. 4 ist besonders gut zu erkennen, in welcher Art die Zentralträger 28,29 angeordnet und ausgeprägt sind. Dabei wird deutlich, dass die radiale Wandstärke D über die axiale Länge der Zentralträger 28,29 variiert. Zur Erhöhung der Biegesteifigkeit des gesamten Bremssattels 2, sind die Zentralträger 28,29 am Übergang zu den Sattelschenkeln 10,11 stärker mit einer Verdickung 30,31 ausgeführt, als dort wo sie die Bremsscheibe 2 überragen. Dies ist der Tatsache geschuldet, dass der Übergangsbereich mechanisch besonders stark belastet ist. Weiterhin ist der Bereich mit der Verdickung 30,31 besonders gut dafür geeignet, die Verbindungsschrauben 58,59 aufzunehmen. Die unterschiedliche Wandstärke D über die axiale Erstreckung der Zentralträger 28,29 erwirkt, dass die Bremsscheibe 2 durch die Zentralträger 28,29 ebenfalls U-förmig umschlossen wird, wobei keine ausgeprägten Brückenschenkel vorhanden sind. Diese zur Drehachse 3 weisende U-förmige Ausprägung der Zentralträger 28,29 ist vorteilhaft, um den Außenradius R der Bremsscheibe 2, und damit auch den Wirkradius der Bremsbeläge 37,38 und der Umfangskraft, möglichst groß zu gestalten. Somit ragt der verdickte Bereich der Zentralträger 28,29 axial projiziert in den Bereich des Reibeingriffs der Bremsbeläge 37,38. Ein Abstand A zwischen dem verdickten Bereich der Zentralträger 28,29, insbesondere zwischen der der Drehachse 3 zugewandten Fläche dieses Bereiches, und der Drehachse 3 der Bremscheibe 2 ist somit kleiner als der Außenradius R der Bremsscheibe 2. Um dieses zu vermeiden, müsste ein Außenradius einer Bremsscheibe um den Betrag der Verdickung der Zentralträger verringert werden, wenn die Außenmaße der Scheibenbremse bedingt durch einen Felgeninnendurchmesser konstant sein sollten. Die vorteilhafte Überschneidung bedingt eine Ausnehmung 39 in den Bremsbelägen 37,38, worin die Verdickung 30,31 der Zentralträger 28,29 aufgenommen werden kann. Diese Ausnehmung 39 verringert nur unwesendlich die Reibungsfläche. Es handelt sich somit um eine hocheffektive Gestaltung des Bremssattels 8, wobei ausschließlich mechanisch hoch belastete Bereiche entsprechend den Beanspruchungen ausgelegt sind, und gleichzeitig eine optimale Bauraumausnutzung realisiert wird.

Die Bremsbeläge 37,38 sind axial verschiebbar in den Aufnahmen in der Sattelbrücke 12 gelagert. Im Folgenden wird zur Beschreibung der Lagerung bezüglich einer der Hauptdrehrichtung 4 von ein- und auslaufseitigen Positionen gesprochen. Dies kann sich sowohl auf eine Position relativ zu einem Bremsbelag, als auch zur Lage eines Bremsbelags im Bremssattel beziehen. Alle Bremsbeläge 37,38 umfassen eine Rückenplatte 40 und einen damit fest verbundenen Reibbelag 41, der vorzugsweise darauf aufgepresst ist. Die Rückenplatte 40 weist einen Rumpfbereich 42 auf, der in Umfangsrichtung 5 in je einen Vorsprung 43,44 übergeht, wobei die Ausnehmung 39 für die Aufnahme der Verdickung 30,31 der Zentralträger 28,29 im Rumpfbereich 42 und im Reibbelag 41 vorgesehen ist. Im vorliegenden Ausführungsbeispiel ist der einlaufseitige Vorsprung 43 L-förmig mit einer Abstützfläche 45 zur radialen Abstützung sowie zwei Anlageflächen 48,49 zur Anlage in Umfangsrichtung 5 ausgebildet. Am auslaufseitigen Vorsprung 44 ist eine Abstützfläche 46 zur radialen Abstützung vorhanden.

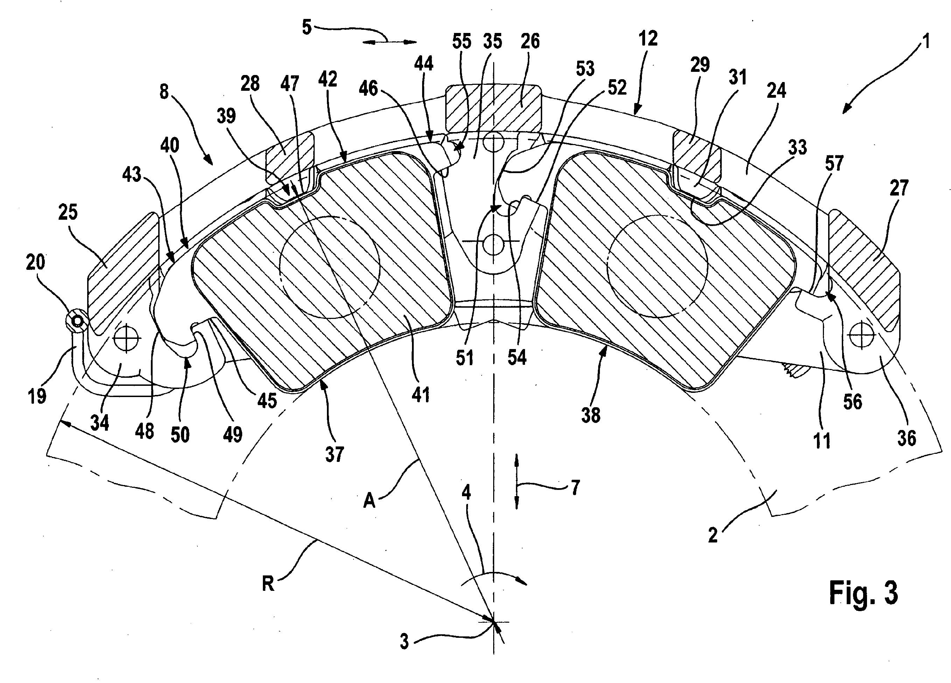

Wie in Fig. 3 gezeigt, sind die einlaufseitigen Aufnahmen für die Bremsbeläge 37,38 in den einlaufseitigen Brückenschenkeln 34 und in den mittleren Brückenschenkeln 35 als Hinterschneidungen 50,51 ausgebildet, in welche die L-förmigen Vorsprünge 43 der Bremsbeläge 37,38 eingreifen. Jede Hinterschneidung 50,51 weist eine Auflage 52 zur radialen Abstützung und je zwei Anschläge 53,54 zur Anlage in Umfangsrichtung 5 auf. Die auslaufseitigen Aufnahmen 55,56 für die Bremsbeläge 37,38 sind an den mittleren Brückenschenkeln 35 und an den auslaufseitigen Brückenschenkeln 36 in Form einer Auflage 57 vorgesehen.

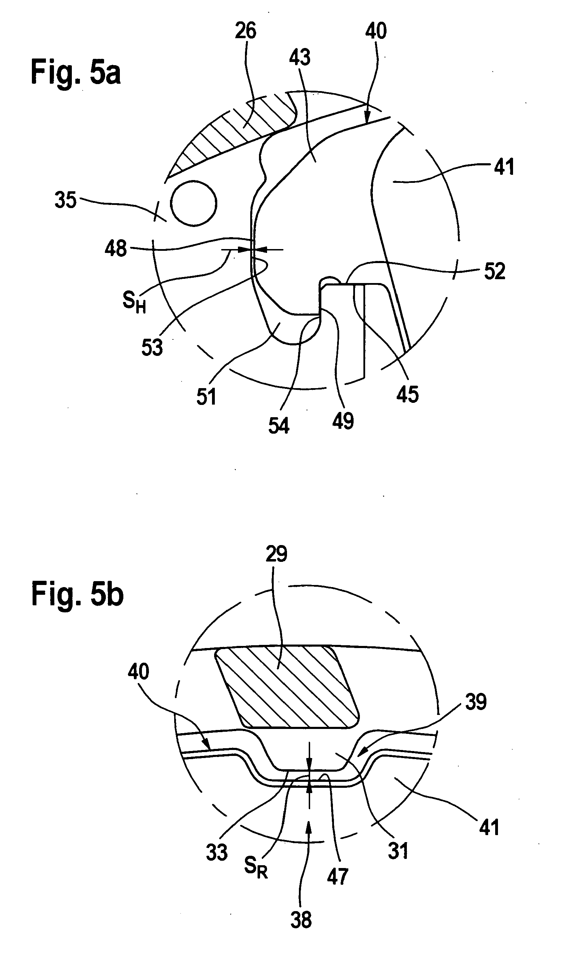

Jeder Bremsbelag 37,38 wird mittels der einlaufseitigen Hinterschneidung 50,51 und der auslaufseitigen Aufnahme 55,56 in Radialrichtung 7 abgestützt. Dabei wirkt die Abstützfläche 45 am einlaufseitigen Vorsprung 43 eines Bremsbelags 37,38 mit der Auflage 52 der Hinterschneidung 50,51 und die Abstützfläche 46 des auslaufseitigen Vorsprungs 44 eines Bremsbelags 37,38 mit der Auflage 57 der Aufnahme 56,57 zusammen. Wie in Fig. 5b exemplarisch und detailliert am Beispiel des Zentralträgers 29 verdeutlicht, ist in der Ausnehmung 39 im Rumpfbereich 42 eine Rumpfabstützfläche 47 vorhanden, welche die Bewegungsmöglichkeit des Bremsbelags 37,38 in Radialrichtung 7 zusammen mit der Abstützfläche 32,33 des Zentralträgers 28,29 mit einem Spiel S_{R} beschränkt. Das Spiel S_{R} ist vorzugsweise 0,3 - 0,5 mm groß. Die Lagerung der Bremsbeläge 37,38 in Umfangsrichtung 5 erfolgt über die Anschläge 53,54 in den Hinterschneidungen 50,51 im Zusammenwirken mit den Anlageflächen 48,49 an den einlaufseitigen Vorsprüngen 43 der Bremsbeläge 37,38. Dies ist exemplarisch in Fig. 5a im Detailschnitt der Hinterschneidung 51 im mittleren Brückenschenkel 35 mit dem einlaufseitigen Vorsprung 43 des Bremsbelags 38 gezeigt. Das Innenmaß in Umfangsrichtung 5 der Hinterschneidung 51 ist etwas größer als der L-förmige Vorsprung 43, so dass sich in Umfangsrichtung 5 ein Spiel S_{H} von 0,3 - 0,6 mm ergibt.

Bei einer Bremsbetätigung der Scheibenbremse 1 werden die Druckräume 17 der Betätigungsvorrichtungen 14 in den Sattelschenkeln 10,11 beaufschlagt, wodurch sich der jeweilige Kolben 16 axial verschiebt und den entsprechenden Bremsbelag 10,11 an die Bremsscheibe 2 presst. Wenn die Bremsscheibe 2 in Hauptdrehrichtung 4 rotiert, so bewirkt die entstehende Umfangskraft, dass die Bremsbelag zugewandten Anlageflächen 49 der L-förmigen Vorsprünge 43 der Bremsbeläge 10,11 mit den Bremsbelag abgewandten Anschlägen 54 der Hinterschneidungen 50,51 in Eingriff gehen. Somit wird die Umfangskraft mittels gezogener Bremsbeläge 37,38 über die Brückenschenkel 34,35 in den Bremssattel 8 abgeleitet. Bei Rückwärtsfahrt legen sich die Bremsbeläge 37,38 mit den Bremsbelag abgewandten Anlageflächen 48 an die Bremsbelag zugewandten Anschläge 53 an, wodurch die Umfangskräfte gedrückt in den Bremssattel 8 eingeleitet werden.

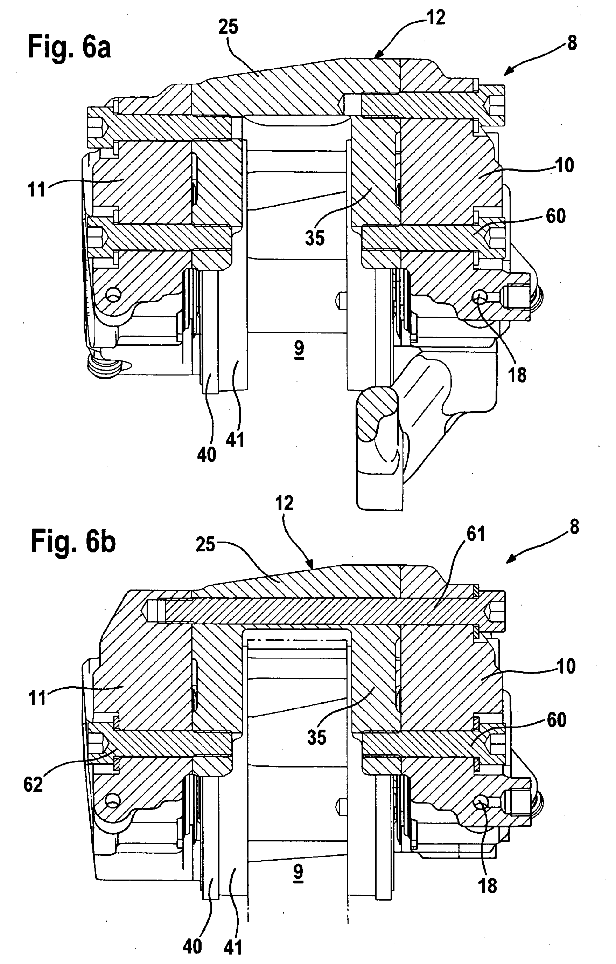

In Fig. 6a und 6b ist der Bremssattel 8 in einem Axialschnitt dargestellt, welcher durch den mittleren Hauptträger 26 und die Brückenschenkel 35 geht. Daran ist erkennbar wie die U-förmige Ausprägung der Sattelbrücke 12 und die Brückenschenkel 35 die Steifigkeit des Bremssattels 8 weiter erhöht wird, indem diese in die tragende Konstruktion mit einbezogen werden. Durch die Verschraubung der Sattelschenkel 10,11 mit der Sattelbrücke 12 und den Brückenschenkeln 35 an radial zwei unterschiedlichen Stellen stützen sich die Betätigungskräfte der Betätigungsvorrichtungen 14 auch über die Brückenschenkel 35 ab. In Fig. 6b ist eine andere Form der Verschraubung realisiert, welche die Anzahl der Schrauben reduziert und insbesondere eine durchgehende Schraube 61 statt zweier einzelner verwendet, was zu einer vereinfachten Montage führt.

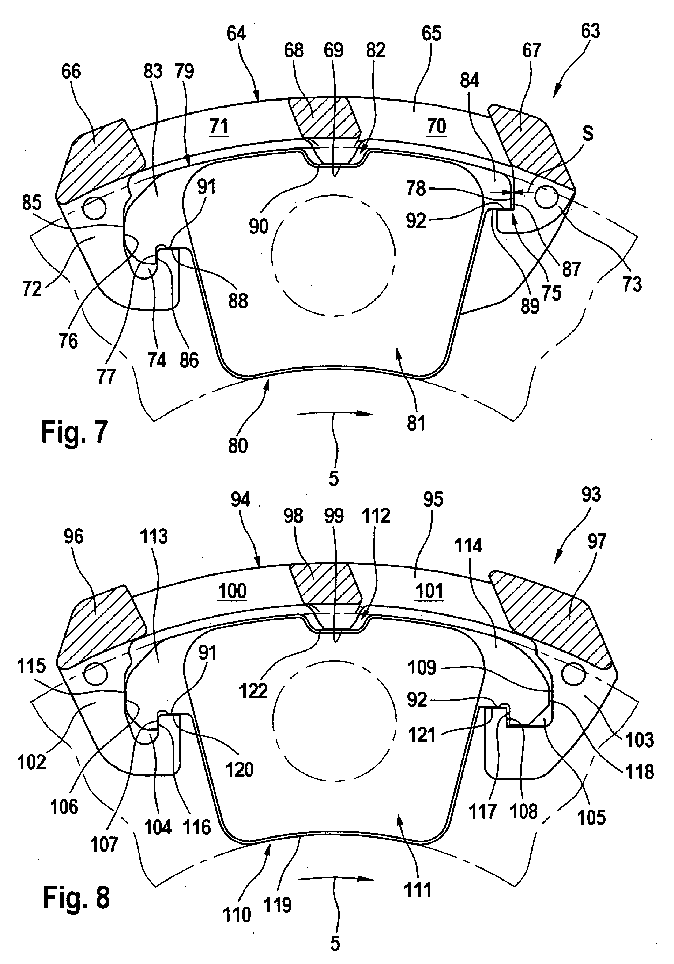

Anhand Fig. 7 wird ein anderes Ausführungsbeispiel eines Bremssattels 63 angeführt, der analog zum ersten Ausführungsbeispiel ist, jedoch eine modifizierte Lagerung des Bremsbelags 80 in Umfangsrichtung 5 und nur ein Paar Bremsbeläge 80 aufweist. Zwei Sattelschenkel übergreifen mittels einer Sattelbrücke 64 eine Bremsscheibe 2, wobei die Sattelbrücke 64 zwei Stege 65 zwei Hauptträger 66,67 und einen Zentralträger 68 aufweist, wodurch zwei radiale Fenster 70,71 gebildet werden. Unterschiedlich zu der ersten Ausführung ist, dass am auslaufseitigen Vorsprung 84 des Bremsbelags 80 eine Anlagefläche 87 und in der auslaufseitigen Aufnahme 75 des auslaufseitigen Brückenschenkels 73 ein Anschlag 78 vorgesehen ist. Dabei sind die Bremsbelag zugewandten Anlagefläche 86 des einlaufseitigen Vorsprungs 83 des Bremsbelags 80 und die Anlagefläche 87 des auslaufseitigen Vorsprungs 84 derart beabstandet, dass im statischen Zustand oder bei einer schwachen Bremsung der Bremsbelag 80 ausschließlich in der Hinterschneidung 74 im einlaufseitigen Brückenschenkel 72 gezogen abgestützt ist, wenn sich die Bremsscheibe 2 in Hauptdrehrichtung 4 dreht. Zwischen dem Bremsbelag 80 und den entsprechenden Anschlägen 76,78 der Brückenschenkel 72,73 ergibt sich dadurch ein Spalt S von etwa 0,5 - 0,6 mm. Als schwache Bremsung soll hierbei eine Bremsung gelten, bei der weniger als circa 40 % der maximalen Bremsleistung benötigt wird. Im Falle einer starken Bremsung verändern sich die geometrischen Verhältnisse zwischen dem Bremsbelag 80 und der Hinterschneidung 74 und der Aufnahme 75 dahin gehend, dass durch die Umfangskraft der einlaufseitige Brückenschenkel 72 elastische verformt und der Bremsbelag 80 gedehnt wird. Dies hat zur Folge, dass sich der Spalt S schließt, und die Rückenplatte 79 des Bremsbelags 80 mit der Anlagefläche 87 an dem auslaufseitigen Anschlag 78 anliegt. So wird ein Teil der Umfangskraft in die auslaufseitige Aufnahme 75 eingeleitet. Die Aufteilung des Kraftflusses je nach Stärke der Bremsung bewirkt, dass bei einer schwachen Bremsung die Vorteile von gezogenen Bremsbelägen, insbesondere bezüglich des Komforts, zum Tragen kommen, und bei einer starken Bremsung auch die Vorteile von über Zug und Druck abgestützten Bremsbelägen hinsichtlich der Stabilität auftreten. Bei Rückwärtsfahrt liegt der Bremsbelag 80 mit der Anlagefläche 85 an dem Anschlag 75 der Hinterschneidung 74 an, wodurch Umfangskräfte gedrückt in den Bremssattel 63 übertragen werden.

Fig. 8 zeigt ein weiteres Ausführungsbeispiel eines Bremssattels 93, wobei der Bremsbelag 110 beidseitig mit L-förmigen Vorsprüngen 113,114 versehen ist, und entsprechend auch in dem ein- und auslaufseitigen Brückenschenkel 102,103 je eine Hinterschneidung 104,105 vorgesehen ist. Diese Ausprägung der Vorsprünge 113,114 bedingt eine drehrichtungsunabhängige Lagerung des Bremsbelags 110.

Die radiale Lagerung der Bremsbeläge 80,110 in den Bremssätteln 63,93 gemäß den Ausführungsbeispielen in Fig. 7 und 8 ist analog ausgeprägt, weshalb eine gemeinsame Beschreibung und Nummerierung gewählt wird. In der Aufnahme 75 und in den Hinterscheidungen 74,104,105 sind Auflagen 91,92 vorgesehen, an welchen die Abstützflächen 88,89, 120,121 der Bremsbeläge 80,110 abgestützt werden. Dabei nehmen die Ausnehmungen 82,112 im Rumpfbereich 81,111 der Bremsbeläge 80,110 den Zentralträger 68,98 teilweise auf und begrenzen mit einem Spiel S_{R} die radiale Bewegungsmöglichkeit der Bremssättel 80,110, indem die Rumpfabstützfläche 90,122 und die Abstützfläche 69,99 am Zentralträger 68,98 zusammenwirken.

Es sei betont, dass die Lagerungsarten aus dem ersten, zweiten und dritten Ausführungsbeispiel frei kombinierbar sind.

### Bezugszeichenliste

- 1: Scheibenbremse
- 2: Bremsscheibe
- 3: Drehachse
- 4: Hauptdrehrichtung
- 5: Umfangsrichtung
- 6: Axialrichtung
- 7: Radialrichtung
- 8: Bremssattel
- 9: Schacht
- 10: Sattelschenkel
- 11: Sattelschenkel
- 12: Sattelbrücke
- 13: Bohrung
- 14: Betätigungsvorrichtung
- 15: Bohrung
- 16: Kolben
- 17: Druckraum
- 18: Stichbohrung
- 19: Druckrohr
- 20: Isolierung
- 21: Fenster
- 22: Fenster
- 23: Steg
- 24: Steg
- 25: Hauptträger
- 26: Hauptträger
- 27: Hauptträger
- 28: Zentralträger
- 29: Zentralträger
- 30: Verdickung
- 31: Verdickung
- 32: Abstützfläche
- 33: Abstützfläche
- 34: Brückenschenkel
- 35: Brückenschenkel
- 36: Brückenschenkel
- 37: Bremsbelag
- 38: Bremsbelag
- 39: Ausnehmung
- 40: Rückenplatte
- 41: Reibbelag
- 42: Rumpfbereich
- 43: Vorsprung
- 44: Vorsprung
- 45: Abstützfläche
- 46: Abstützfläche
- 47: Rumpfabstützfläche
- 48: Anlagefläche
- 49: Anlagefläche
- 50: Hinterschneidung
- 51: Hinterschneidung
- 52: Auflage
- 53: Anschlag
- 54: Anschlag
- 55: Aufnahme
- 56: Aufnahme
- 57: Auflage
- 58: Verbindungsschraube
- 59: Verbindungsschraube
- 60: Schraube
- 61: Schraube
- 62: Schraube
- 63: Bremssattel
- 64: Sattelbrücke
- 65: Steg
- 66: Hauptträger
- 67: Hauptträger
- 68: Zentralträger
- 69: Abstützfläche
- 70: Fenster
- 71: Fenster
- 72: Brückenschenkel
- 73: Brückenschenkel
- 74: Hinterscheidung
- 75: Aufnahme
- 76: Anschlag
- 77: Anschlag
- 78: Anschlag
- 79: Rückenplatte
- 80: Bremsbelag
- 81: Rumpfbereich
- 82: Ausnehmung
- 83: Vorsprung
- 84: Vorsprung
- 85: Anlagefläche
- 86: Anlagefläche
- 87: Anlagefläche
- 88: Abstützfläche
- 89: Abstützfläche
- 90: Rumpfabstützfläche
- 91: Auflage
- 92: Auflage
- 93: Bremssattel
- 94: Sattelbrücke
- 95: Steg
- 96: Hauptträger
- 97: Hauptträger
- 98: Zentralträger
- 99: Abstützfläche
- 100: Fenster
- 101: Fenster
- 102: Brückenschenkel
- 103: Brückenschenkel
- 104: Hinterscheidung
- 105: Hinterscheidung
- 106: Anschlag
- 107: Anschlag
- 108: Anschlag
- 109: Anschlag
- 110: Bremsbelag
- 111: Rumpfbereich
- 112: Ausnehmung
- 113: Vorsprung
- 114: Vorsprung
- 115: Anlagefläche
- 116: Anlagefläche
- 117: Anlagefläche
- 118: Anlagefläche
- 119: Rückenplatte
- 120: Abstützfläche
- 121: Abstützfläche
- 122: Rumpfabstützfläche

- A: Abstand
- D: Wandstärke
- R: Außenradius
- S_{H}: Spiel
- S_{R}: Spiel
- S: Spalt

## Patentansprüche

1. Scheibenbremse mit einem Bremssattel,
- der eine drehbare Bremsscheibe U-förmig axial umgreift, und eine Sattelbrücke, zwei Sattelschenkel und mindestens eine Betätigungsvorrichtung umfasst,
- und im Bremssattel mindestens ein Bremsbelag axial verschiebbar gelagert ist,
- wobei die Sattelbrücke in einer Umfangsrichtung mindestens drei, im Wesentlichen axial verlaufende Träger aufweist,
- und wobei die Träger als zwei Hauptträger und ein Zentralträger ausgebildet sind, welche die Sattelschenkel unter Bildung zweier Fenster verbinden und die Bremsscheibe axial überragen,
- wobei der Zentralträger die Bremsscheibe und den Bremsbelag axial überragt,
**dadurch gekennzeichnet, dass** eine radiale Wandstärke (D) des Zentralträgers (28,29;68;98) derart ausgeprägt ist, dass in einem axialen Bereich des Bremsbelags (37,38;80;110) ein Abstand (A) zwischen dem Zentralträger (28,29;68;98) und einer Drehachse (3) der Bremsscheibe (2) kleiner ist als ein Außenradius (R) der Bremsscheibe (2).

2. Scheibenbremse nach Anspruch 1, **dadurch gekennzeichnet, dass** die Hauptträger (25,26,27;66,67;96,97) und der Zentralträger (28,29;68;98) die Bremsscheibe (2) U-förmig in einer Axialrichtung (6) umschließen.

3. Scheibenbremse nach Anspruch 2, **dadurch gekennzeichnet, dass** an den Hauptträgern (25,26,27;66,67;96,97) Brückenschenkel (34,35,36;72,73;102,103) angeordnet sind, an welchen der Bremsbelag (37,38;80;110) in Umfangsrichtung (5) und in einer Radialrichtung (7) abgestützt ist.

4. Scheibenbremse nach Anspruch 3, **dadurch gekennzeichnet, dass** an mindestens einem, bezüglich des Bremsbelags (37,38;80;110), einlaufseitigen Brückenschenkel (34,35;72;102,103) eine Hinterschneidung (50,51;74; 104,105) vorgesehen ist, welche Anschläge (53,54;76,77; 106,107,108,109) zur Anlage des Bremsbelags (37,38;80;110) in Umfangsrichtung (5) und eine Auflage (52;91;92) zur radialen Abstützung des Bremsbelags (37,38;80;110) umfasst.

5. Scheibenbremse nach Anspruch 4, **dadurch gekennzeichnet, dass** der Bremsbelag (37,38;80;110) eine Rückenplatte (40;79;119) und einen Reibbelag (41) umfasst, wobei die Rückenplatte (40;79;119) einen Rumpfbereich (42;81;111) mit zwei in Umfangsrichtung (5) angrenzenden Vorsprüngen (43,44;83,84;113,114) aufweist, wobei mindestens ein Vorsprung (43;83;113,114) L-förmig mit einer Abstützfläche (45;88;120,121) zur radialen Abstützung sowie zwei Anlageflächen (48,49;85,86;115,116,117,118) zur Anlage in Umfangsrichtung (5) ausgebildet ist und in die Hinterschneidung (50,51;74;104,105) des Brückenschenkels (34,35;72;102,103) eingreift.

6. Scheibenbremse nach Anspruch 5, **dadurch gekennzeichnet, dass** die Hinterschneidung (50,51;74) bezüglich einer Hauptdrehrichtung (4) der Bremsscheibe (2) ausschließlich einlaufseitig pro Bremsbelag (37,38;80) im Bremssattel (8,63) vorgesehen ist, und die Rückenplatte (40;79) ausschließlich einlaufseitig einen L-förmigen Vorsprung (43;83) aufweist, so dass ein Kraftfluss von Umfangskräften aus der Rückenplatte (40;79) in den Bremssattel (8,63) über die Anlagefläche (49;86) und den Anschlag (54;77) gezogen erfolgt, wenn die Bremsscheibe (2) in der Hauptdrehrichtung (4) rotiert, und über die Anlagenfläche (48;85) und den Anschlag (53;76) gedrückt erfolgt, wenn sich die Bremsscheibe (2) entgegen der Hauptdrehrichtung (4) dreht.

7. Scheibenbremse nach Anspruch 5 oder 6, **dadurch gekennzeichnet, dass** an einem auslaufseitigen Brückenschenkel (73;113,114) ein Anschlag (78) und eine Auflage (92) vorgesehen sind, wodurch der Bremsbelag (80;110) mittels der Abstützflächen (88,89;120,121) radial abstützbar ist, und wobei die Anschläge (77,78;107,109) im Bremssattel (63,93) derart in Umfangsrichtung (5) beabstandet sind, so dass, wenn die Bremsscheibe (2) in der Hauptdrehrichtung (4) rotiert, bei bremsungsinduzierten, mäßigen Umfangskräften ausschließlich der einlaufseitige Anschlag (77;107) mit der Anlagefläche (86;116) im Eingriff ist, und bei hohen Umfangskräften zusätzlich der auslaufseitige Vorsprung (84;114) verformungsbedingt am Anschlag (78;109) anliegt.

8. Scheibenbremse nach einem oder mehreren der voran gestellten Ansprüche, **dadurch gekennzeichnet, dass** an dem Zentralträger (28,29;68;98) eine Abstützfläche (32,33;69;99) vorgesehen ist, die zusammenwirkend mit den Auflagen (52,57;91,92) der Brückenschenkel (34,35,36; 72,73;102,103) eine Bewegungsmöglichkeit des Bremsbelag (37,38;80;110) im Bremssattel (8;63;93) in Radialrichtung (7) mit einem Spiel (S_{R}) begrenzt.

9. Scheibenbremse nach einem oder mehreren der voran gestellten Ansprüche, **dadurch gekennzeichnet, dass** am Bremsbelag (37,38;80;110) eine mit der Abstützfläche (32,33;69;99) des Zentralträgers (28,29;68;98) zusammenwirkende Rumpfabstützfläche (47;90) vorgesehen ist, die an einer einer Drehachse (3) der Bremsscheibe (2) abgewandten Seite des Rumpfbereichs (42;81;111) und im Wesentlichen mittig zwischen den Vorsprüngen (43,44;83,84;113,114) angeordnet ist.

10. Scheibenbremse nach einem oder mehreren der voran gestellten Ansprüche, **dadurch gekennzeichnet, dass** eine Ausnehmung (39;82;112) im Bremsbelag (37,38;80;110) vorgesehen ist, welche den Zentralträger (28,29;68;98) zumindest teilweise aufnimmt.

11. Scheibenbremse nach Anspruch 10, **dadurch gekennzeichnet, dass** die Rumpfabstützfläche (47;90) in der Ausnehmung (39;82;112) des Bremsbelags (37,38;80;110) angeordnet ist.

12. Scheibenbremse nach einem oder mehreren der voran gestellten Ansprüche, **dadurch gekennzeichnet, dass** im Bremssattel (8) mindestens zwei Paar Bremsbeläge (37,38) nebeneinander in Umfangsrichtung (5) zur axial beidseitigen Beaufschlagung der Bremscheibe (2) vorgesehen sind.

13. Scheibenbremse nach Anspruch 12, **dadurch gekennzeichnet, dass** die Hinterschneidung (51) für den auslaufseitigen Bremsbelag (38) an einem Brückenschenkel (35) ausgebildet ist, der die Auflage (52) für den einlaufseitigen Bremsbelag (37) aufnimmt.

14. Scheibenbremse nach einem oder mehreren der voran gestellten Ansprüche, **dadurch gekennzeichnet, dass** die Sattelschenkel (10,11) aus einem Leichtbauwerkstoff hergestellt sind, und die Sattelbrücke (12;64;94) aus einem festeren Werkstoff als die Sattelschenkel (10,11) hergestellt ist.

15. Scheibenbremse nach einem oder mehreren der voran gestellten Ansprüche, **dadurch gekennzeichnet, dass** die Sattelschenkel (10,11) mit der Sattelbrücke (12) und den Brückenschenkeln (35) je an zwei radial unterschiedlichen Stellen verschraubbar sind, so dass die Brückenschenkel (35) die Steifigkeit des Bremssattels (8) erhöhen.

16. Scheibenbremse nach einem oder mehreren der voran gestellten Ansprüche, **dadurch gekennzeichnet, dass** der Bremssattel (8;63;93) als Schwimmsattel oder Festsattel ausgebildet ist.

17. Bremsbelag für eine Scheibenbremse nach Anspruch 1,
**dadurch gekennzeichnet, dass** in einer Rückenplatte (40;79;119) und in einem Reibbelag (41) des Bremsbelags (37,38;80;110) eine Ausnehmung (39;82;112) vorgesehen ist, welche die Sattelbrücke (12;64;94) zumindest teilweise aufnimmt.

18. Bremsbelag nach Anspruch 17, **dadurch gekennzeichnet, dass** die Sattelbrücke (12;64;94) in einer Umfangsrichtung (5) mindestens drei, im Wesentlichen axial verlaufende Träger aufweist, wobei die Träger als zwei Hauptträger (25,26,27;66,67;96,97) und ein Zentralträger (28,29;68;98) ausgebildet sind, welche die Sattelschenkel (10,11) unter Bildung zweier Fenster (20,21;70,71;100,101) verbinden und die Bremsscheibe (2) axial überragen, wobei der Zentralträger (28,29;68;98) die Bremsscheibe (2) und den Bremsbelag (37,38;80;110) axial überragt und von der Ausnehmung (39;82;112) in Umfangsrichtung (5) beidseitig aufgenommen wird.

19. Bremsbelag nach Anspruch 17 oder 18, **dadurch gekennzeichnet, dass** der Bremsbelag (37,38;80;110) eine Rückenplatte (40;79;119) und einen Reibbelag (41) umfasst, wobei die Rückenplatte (40;79;119) einen Rumpfbereich (42;81;111) mit zwei in Umfangsrichtung (5) angrenzenden Vorsprüngen (43,44;83,84;113,114) aufweist, wobei mindestens ein Vorsprung (43;83;113,114) L-förmig mit einer Abstützfläche (45;88;120,121) zur radialen Abstützung, sowie mit zwei Anlageflächen (48,49;85,86;115,116,117, 118) zur Anlage in einer Umfangsrichtung (5) ausgebildet ist, und in eine Hinterschneidung (50,51;74;104,105) in der Sattelbrücke (12;64;94) eingreift, und der andere Vorsprung (44;84;113,114) eine weitere Abstützfläche (46;89;120,121) aufweist.

20. Bremsbelag nach Anspruch 19, **dadurch gekennzeichnet, dass** am Rumpfbereich (42;81;111) eine Rumpfabstützfläche (47;90;122) vorgesehen ist, die zusammenwirkend mit den Abstützflächen (45,46;88,89;120,121) der Vorsprünge (43,44;83,84;113,114) eine Bewegungsmöglichkeit des Bremsbelag (37,38;80;110) im Bremssattel (8;63;93) in Radialrichtung (7) mit einem Spiel (S_{R}) begrenzt.

21. Bremsbelag nach Anspruch 20, **dadurch gekennzeichnet, dass** die Rumpfabstützfläche (47;90;122) in der Ausnehmung (39; 82;112) des Bremsbelags (37,38;80;110) angeordnet ist.

22. Bremsbelag nach einem oder mehreren der voran gestellten Ansprüche 17 bis 21, **dadurch gekennzeichnet, dass** der L-förmige Vorsprung (43;83;113) bezüglich einer Hauptdrehrichtung (4) der Bremsscheibe (2) ausschließlich einlaufseitig an dem Rumpfbereich (42;81;111) der Rückenplatte (40;79;119) ausgebildet ist, so dass der Kraftfluss der Umfangskräfte aus der Rückenplatte (40;79;119) in den Bremssattel (8;63;93) über die Anlagefläche (49;86;116) gezogen erfolgt, wenn die Bremsscheibe (2) in der Hauptdrehrichtung (4) rotiert, und über die Anlagenfläche (48;85;115) gedrückt erfolgt, wenn die Bremsscheibe (2) entgegen der Hauptdrehrichtung (4) rotiert.

23. Bremsbelagsatz für eine Scheibenbremse nach einem oder mehreren der voran gestellten Ansprüche, **dadurch gekennzeichnet, dass** mindestens zwei Bremsbeläge (37,38), die in Umfangsrichtung (5) nebeneinander auf derselben Seite der Bremsscheibe (2) angeordnet sind, gleich ausgeführt sind.

## Claims

1. Disk brake having a brake caliper,
- which engages axially in a U shape around a rotatable brake disk, and comprises a caliper bridge, two caliper limbs and at least one actuating device,
- and at least one brake lining is mounted in an axially movable fashion in the brake caliper,
- wherein the caliper bridge has, in a peripheral direction, at least three substantially axially extending supports,
- and wherein the supports are embodied as two main supports and one central support which connect the caliper limbs forming two windows and axially project beyond the brake disk,
- wherein the central support axially projects beyond the brake disk and the brake lining, **characterized in that** a radial wall thickness (D) of the central support (28, 29; 68; 98) is designed in such a way that in an axial region of the brake lining (37, 38; 80; 110) a distance (A) between the central support (28, 29; 68; 98) and a rotational axis (3) of the brake disk (2) is smaller than an external radius (R) of the brake disk (2).

2. Disk brake according to Claim 1, **characterized in that** the main supports (25, 26, 27; 66, 67; 96, 97) and the central support (28, 29; 68; 98) enclose the brake disk (2) in a U shape in an axial direction (6).

3. Disk brake according to Claim 2, **characterized in that** bridge limbs (34, 35, 36; 72, 73; 102, 103) are arranged on the main supports (25, 26, 27; 66, 67; 96, 97), on which bridge limbs (34, 35, 36; 72, 73; 102, 103) the brake lining (37, 38; 80; 110) is supported in the peripheral direction (5) and in a radial direction (7).

4. Disk brake according to Claim 3, **characterized in that** an undercut (50, 51; 74; 104, 105) is provided on at least one inlet-side bridge limb (34, 35; 72; 102, 103) with respect to the brake lining (37, 38; 80; 110), which undercut (50, 51; 74; 104, 105) comprises stops (53, 54; 76, 77; 106, 107, 108, 109) for the brake lining (37, 38; 80; 110) to bear against in the peripheral direction (5), and a supporting means (52; 91; 92) for radially supporting the brake lining (37, 38; 80; 110).

5. Disk brake according to Claim 4, **characterized in that** the brake lining (37, 38; 80; 110) comprises a back plate (40; 79; 119) and a friction lining (41), wherein the back plate (40; 79; 119) has a rear region (42; 81; 111) having two projections (43, 44; 83, 84; 113, 114) which adjoin in the peripheral direction (5), wherein at least one projection (43; 83; 113, 114) is embodied in an L shape with a supporting face (45; 88; 120, 121) for providing radial support and two bearing faces (48, 49; 85, 86; 115, 116, 117, 118) for permitting bearing in the peripheral direction (5), and said projection (43; 83; 113, 114) engages in the undercut (50, 51; 74; 104, 105) of the bridge limb (34, 35; 72; 102, 103).

6. Disk brake according to Claim 5, **characterized in that** the undercut (50, 51; 74) is provided exclusively on the inlet side, with respect to a main rotational direction (4) of the brake disk (2), for each brake lining (37, 38; 80) in the brake caliper (8, 63), and the back plate (40; 79) has an L-shaped projection (43; 83) exclusively on the inlet side, with the result that a flow of force of peripheral forces from the back plate (40; 79) into the brake caliper (8, 63) occurs by means of tension via the bearing face (49; 86) and the stop (54; 77) when the brake disk (2) rotates in the main rotational direction (4), and occurs by means of pressure via the bearing face (48; 85) and the stop (53; 76) when the brake disk (2) rotates in a direction opposed to the main rotational direction (4).

7. Disk brake according to Claim 5 or 6, **characterized in that** a stop (78) and a supporting means (92) are provided on an outlet-side bridge limb (73; 113, 114), as a result of which the brake lining (80; 110) can be supported radially by means of the supporting faces (88, 89; 120, 121) and wherein the stops (77, 78; 107, 109) are spaced apart in the peripheral direction (5) in the brake caliper (63, 93) in such a way that when the brake disk (2) rotates in the main rotational direction (4), exclusively the inlet-side stop (77; 107) is in engagement with the bearing face (86; 116) when there are moderate peripheral forces induced by braking, and additionally the outlet-side projection (84; 114) bears against the stop (78; 109) under the effect of deformation when there are high peripheral forces.

8. Disk brake according to one or more of the preceding claims, **characterized in that** a supporting face (32, 33; 69; 99) is provided on the central support (28, 29; 68; 98), which supporting face (32, 33; 69; 99) bounds, through interaction with the supporting means (52, 57; 91, 92) of the bridge limbs (34, 35, 36; 72, 73; 102, 103), a possible movement of the brake lining (37, 38; 80; 110) in the radial direction (7) with play (S_{R}) in the brake caliper (8; 63; 93).

9. Disk brake according to one or more of the preceding claims, **characterized in that** a rear supporting face (47; 90) which interacts with the supporting face (32, 33; 69; 99) of the central support (28, 29; 68; 98) is provided on the brake lining (37, 38; 80; 110), which rear supporting face (47; 90) is arranged on a side of the rear region (42; 81; 111) facing away from a rotational axis (3) of the brake disk (2), and substantially centrally between the projections (43, 44; 83, 84; 113, 114).

10. Disk brake according to one or more of the preceding claims, **characterized in that** a recess (39; 82; 112), which at least partially accommodates the central support (28, 29; 68; 98), is provided in the brake lining (37, 38; 80; 110).

11. Disk brake according to Claim 10, **characterized in that** the rear supporting face (47; 90) is arranged in the recess (39; 82; 112) of the brake lining (37, 38; 80; 110).

12. Disk brake according to one or more of the preceding claims, **characterized in that** at least two pairs of brake linings (37, 38) are provided one next to the other in the peripheral direction (5) in the brake caliper (8) in order to act axially on both sides of the brake disk (2).

13. Disk brake according to Claim 12, **characterized in that** the undercut (51) for the outlet-side brake lining (38) is formed on a bridge limb (35) which accommodates the supporting means (52) for the inlet-side brake lining (37).

14. Disk brake according to one or more of the preceding claims, **characterized in that** the caliper limbs (10, 11) are manufactured from a lightweight material, and the caliper bridge (12; 64; 94) is manufactured from a stronger material than the caliper limbs (10, 11).

15. Disk brake according to one or more of the preceding claims, **characterized in that** the caliper limbs (10, 11) can respectively be screwed to the caliper bridge (12) and the bridge limbs (35) at two radially different locations, with the result that the bridge limbs (35) increase the rigidity of the brake caliper (8).

16. Disk brake according to one or more of the preceding claims, **characterized in that** the brake caliper (8; 63; 93) is embodied as a floating caliper or fixed caliper.

17. Brake lining for a disk brake according to Claim 1, **characterized in that** a recess (39; 82; 112), which at least partially accommodates the caliper bridge (12; 64; 94), is provided in a back plate (40; 79; 119) and in a friction lining (41) of the brake lining (37, 38; 80; 110).

18. Brake lining according to Claim 17, **characterized in that** the caliper bridge (12; 64; 94) has, in a peripheral direction (5), at least three substantially axially extending supports, wherein the supports are embodied as two main supports (25, 26, 27; 66, 67; 96, 97) and one central support (28, 29; 68; 98) which connect the caliper limbs (10, 11) forming two windows (20, 21; 70, 71; 100, 101) and axially project beyond the brake disk (2), wherein the central support (28, 29; 68; 98) axially projects beyond the brake disk (2) and the brake lining (37, 38; 80; 110) and is accommodated on both sides by the recess (39; 82; 112) in the peripheral direction (5).

19. Brake lining according to Claim 17 or 18, **characterized in that** the brake lining (37, 38; 80; 110) comprises a back plate (40; 79; 119) and a friction lining (41), wherein the back plate (40; 79; 119) has a rear region (42; 81; 111) with two projections (43, 44; 83, 84; 113, 114) which adjoin in the peripheral direction (5), wherein at least one projection (43; 83; 113, 114) is embodied in an L shape with a supporting face (45; 88; 120, 121) for providing radial support, and with two bearing faces (48, 49; 85, 86; 115, 116, 117, 118) for permitting bearing in a peripheral direction (5), and engages in an undercut (50, 51; 74; 104, 105) in the caliper bridge (12; 64; 94), and the other projection (44; 84; 113, 114) has a further supporting face (46; 89; 120, 121).

20. Brake lining according to Claim 19, **characterized in that** a rear supporting face (47; 90, 122) is provided on the rear region (42; 81; 111), which rear supporting face (47; 90; 122) bounds, through interaction with the supporting faces (45, 46; 88, 89; 120, 121) of the projections (43, 44; 83, 84; 113, 114), a possible movement of the brake lining (37, 38; 80; 110) in the radial direction (7) with play (S_{R}) in the brake caliper (8; 63; 93).

21. Brake lining according to Claim 20, **characterized in that** the rear supporting face (47; 90; 122) is arranged in the recess (39; 82; 112) of the brake lining (37, 38; 80; 110).

22. Brake lining according to one or more of the preceding Claims 17 to 21, **characterized in that** the L-shaped projection (43; 83; 113) is embodied exclusively on the inlet side, with respect to a main rotational direction (4) of the brake disk (2), on the rear region (42; 81; 111) of the back plate (40; 79; 119), with the result that the flow of force of the peripheral forces from the back plate (40; 79; 119) into the brake caliper (8; 63; 93) occurs by means of tension via the bearing face (49; 86; 116) when the brake disk (2) rotates in the main rotational direction (4), and occurs by means of pressure via the bearing face (48; 85; 115) when the brake disk (2) rotates in a direction opposed to the main rotational direction (4).

23. Set of brake linings for a disk brake according to one or more of the preceding claims, **characterized in that** at least two brake linings (37, 38) which are arranged one next to the other on the same side of the brake disk (2) in the peripheral direction (5) are embodied in the same way.

## Revendications

1. Frein à disque comprenant un étrier de frein,
- qui vient en prise axialement en forme de U autour d'un disque de frein rotatif, et qui comprend un pont d'étrier, deux branches d'étrier, et au moins un dispositif d'actionnement,
- au moins une garniture de frein étant montée de manière déplaçable axialement dans l'étrier de frein,
- le pont d'étrier présentant dans une direction périphérique au moins trois supports s'étendant essentiellement axialement,
- et les supports étant réalisés sous forme de deux supports principaux et d'un support central, qui relient les branches d'étrier en formant deux fenêtres et qui s'étendent axialement au-delà du disque de frein,
- le support central s'étendant axialement au-delà du disque de frein et de la garniture de frein, **caractérisé en ce qu'**une épaisseur de paroi radiale (D) du support central (28, 29 ; 68 ; 98) est marquée radialement de telle sorte que dans une région axiale de la garniture de frein (37, 38 ; 80 ; 110), une distance (A) entre le support central (28, 29 ; 68 ; 98) et un axe de rotation (3) du disque de frein (2) soit inférieure à un rayon extérieur (R) du disque de frein (2).

2. Frein à disque selon la revendication 1, **caractérisé en ce que** les supports principaux (25, 26, 27 ; 66, 67 ; 96, 97) et le support central (28, 29 ; 68 ; 98) entourent le disque de frein (2) en forme de U dans une direction axiale (6).

3. Frein à disque selon la revendication 2, **caractérisé en ce que** l'on dispose sur les supports principaux (25, 26, 27 ; 66, 67 ; 96, 97) des branches de pont (34, 35, 36 ; 72, 73 ; 102, 103) sur lesquelles la garniture de frein (37, 38 ; 80 ; 110) est supportée dans la direction périphérique (5) et dans une direction radiale (7).

4. Frein à disque selon la revendication 3, **caractérisé en ce que** l'on prévoit sur au moins une branche de pont (34, 35 ; 72 ; 102, 103) du côté de l'entrée par rapport à la garniture de frein (37, 38 ; 80 ; 110) une contre-dépouille (50, 51 ; 74 ; 104, 105) qui comprend des butées (53, 54 ; 76, 77 ; 106, 107, 108, 109) pour l'application de la garniture de frein (37, 38 ; 80 ; 110) dans la direction périphérique (5) et un appui (52 ; 91 ; 92) pour le support radial de la garniture de frein (37, 38 ; 80 ; 110).

5. Frein à disque selon la revendication 4, **caractérisé en ce que** la garniture de frein (37, 38 ; 80 ; 110) comprend une plaque arrière (40 ; 79 ; 119) et une garniture de friction (41), la plaque arrière (40 ; 79 ; 119) présentant une région de tronc (42 ; 81 ; 111) avec deux saillies (43, 44 ; 83, 84 ; 113, 114) adjacentes dans la direction périphérique (5), au moins une saillie (43 ; 83 ; 113, 114) étant réalisée en forme de L avec une surface de support (45 ; 88 ; 120, 121) pour le support radial, ainsi que deux surfaces d'appui (48, 49 ; 85, 86 ; 115, 116, 117, 118) pour l'appui dans la direction périphérique (5), et venant en prise dans la contre-dépouille (50, 51 ; 74 ; 104, 105) de la branche de pont (34, 35 ; 72 ; 102, 103).

6. Frein à disque selon la revendication 5, **caractérisé en ce que** la contre-dépouille (50, 51 ; 74) est prévue dans l'étrier de frein (8, 63), par rapport à une direction de rotation principale (4) du disque de frein (2), exclusivement du côté de l'entrée pour chaque garniture de frein (37, 38 ; 80), et la plaque arrière (40 ; 79) présente, exclusivement du côté de l'entrée, une saillie en forme de L (43 ; 83), de sorte qu'un flux de forces de forces périphériques se produise en traction depuis la plaque arrière (40 ; 79) dans l'étrier de frein (8, 63) par le biais de la surface d'appui (49 ; 86) et de la butée (54 ; 77), quand le disque de frein (2) tourne dans la direction de rotation principale (4), et se produise en poussée par le biais de la surface d'appui (48 ; 85) et de la butée (53 ; 76) quand le disque de frein (2) tourne dans le sens inverse de la direction de rotation principale (4).

7. Frein à disque selon la revendication 5 ou 6, **caractérisé en ce que** l'on prévoit sur une branche de pont du côté de la sortie (73 ; 113, 114) une butée (78) et un appui (92), de sorte que la garniture de frein (80 ; 110) puisse s'appuyer radialement au moyen des surfaces de support (88, 89 ; 120, 121), les butées (77, 78; 107, 109) dans l'étrier de frein (63, 93) étant espacées dans la direction périphérique (5) de telle sorte que lorsque le disque de frein (2) tourne dans la direction de rotation principale (4), dans le cas de forces périphériques modestes induites par le freinage, exclusivement la butée du côté de l'entrée (77 ; 107) soit en prise avec la surface d'appui (86 ; 116), et que dans le cas de forces périphériques élevées, la saillie du côté de la sortie (84 ; 114) s'applique en outre contre la butée (78 ; 109) sous l'effet des déformations.

8. Frein à disque selon l'une quelconque ou plusieurs des revendications précédentes, **caractérisé en ce que** l'on prévoit sur le support central (28, 29 ; 68 ; 98) une surface de support (32, 33 ; 69 ; 99) qui, en coopérant avec les appuis (52, 57 ; 91, 92) des branches de pont (34, 35, 36 ; 72, 73 ; 102, 103), limite une possibilité de mouvement de la garniture de frein (37, 38 ; 80 ; 110) dans l'étrier de frein (8 ; 63 ; 93) dans la direction radiale (7) avec un jeu (S_{R}).

9. Frein à disque selon l'une quelconque ou plusieurs des revendications précédentes, **caractérisé en ce que** l'on prévoit sur la garniture de frein (37, 38 ; 80 ; 110) une surface de support de tronc (47 ; 90) coopérant avec la surface de support (32, 33 ; 69 ; 99) du support central (28, 29 ; 68 ; 98), laquelle est disposée sur un côté de la région de tronc (42 ; 81 ; 111) opposé à un axe de rotation (3) du disque de frein (2) et essentiellement centralement entre les saillies ((43, 44 ; 83, 84 ; 113, 114).

10. Frein à disque selon l'une quelconque ou plusieurs des revendications précédentes, **caractérisé en ce qu'**un évidement (39 ; 82 ; 112) est prévu dans la garniture de frein (37, 38 ; 80 ; 110), lequel reçoit le support central (28, 29 ; 68 ; 98) au moins en partie.

11. Frein à disque selon la revendication 10, **caractérise en ce que** la surface de supports de tronc (47 ; 90) est disposée dans l'évidement (39 ; 82 ; 112) de la garniture de frein (37, 38 ; 80 ; 110).

12. Frein à disque selon l'une quelconque ou plusieurs des revendications précédentes, **caractérisé en ce que** l'on prévoit dans l'étrier de frein (8) au moins deux paires de garnitures de frein (37, 38) l'une à côté de l'autre dans la direction périphérique (5) en vue d'une sollicitation axiale bilatérale du disque de frein (2).

13. Frein à disque selon la revendication 12, **caractérisé en ce que** la contre-dépouille (51) pour la garniture de frein (38) du côté de la sortie est réalisée sur une branche de pont (35) qui reçoit l'appui (52) pour la garniture de frein (37) du côté de l'entrée.

14. Frein à disque selon l'une quelconque ou plusieurs des revendications précédentes, **caractérisé en ce que** les branches d'étrier (10, 11) sont fabriquées en un matériau de construction léger, et le pont d'étrier (12 ; 64 ; 94) est fabriqué en un matériau plus solide que les branches d'étrier (10, 11).

15. Frein à disque selon l'une quelconque ou plusieurs des revendications précédentes, **caractérisé en ce que** les branches d'étrier (10, 11) avec le pont d'étrier (12) et les branches de pont (35) peuvent être vissées à chaque fois en deux emplacements différents radialement, de sorte que les branches de pont (35) accroissent la rigidité de l'étrier de frein (8).

16. Frein à disque selon l'une quelconque ou plusieurs des revendications précédentes, **caractérisé en ce que** l'étrier de frein (8 ; 63 ; 93) est réalisé en tant qu'étrier flottant ou étrier fixe.

17. Garniture de frein pour un frein à disque selon la revendication 1, **caractérisée en ce que** dans une plaque arrière (40 ; 79 ; 119) et dans une garniture de friction (41) de la garniture de frein (37, 38 ; 80 ; 110) est prévu un évidement (39 ; 82 ; 112), qui reçoit au moins en partie le pont d'étrier (12 ; 64 ; 94).

18. Garniture de frein selon la revendication 17, **caractérisée en ce que** le pont d'étrier (12 ; 64 ; 94) présente dans une direction périphérique (5) au moins trois supports s'étendant essentiellement axialement, les supports étant réalisés sous forme de deux supports principaux (25, 26, 27 ; 66, 67 ; 96, 97) et d'un support central (28, 29 ; 68 ; 98), lesquels relient les branches d'étrier (10, 11) en formant deux fenêtres (20, 21 ; 70, 71 ; 100, 101) et s'étendent axialement au-delà du disque de frein (2), le support central (28, 29 ; 68 ; 98) s'étendant axialement au-delà du disque de frein (2) et de la garniture de frein (37, 38 ; 80 ; 110) et étant reçu des deux côtés par l'évidement (39 ; 82 ; 112) dans la direction périphérique (5).

19. Garniture de frein selon la revendication 17 ou 18, **caractérisée en ce que** la garniture de frein (37, 38 ; 80 ; 110) comprend une plaque arrière (40 ; 79 ; 119) et une garniture de friction (41), la plaque arrière (40 ; 79 ; 119) présentant une région de tronc (42 ; 81 ; 111) avec deux saillies (43, 44 ; 83, 84 ; 113, 114) adjacentes dans la direction périphérique (5), au moins une saillie (43 ; 83 ; 113, 114) étant réalisée en forme de L avec une surface de support (45 ; 88 ; 120, 121) pour le support radial, ainsi que deux surfaces d'appui (48, 49 ; 85, 86 ; 115, 116, 117, 118) pour l'appui dans une direction périphérique (5), et venant en prise dans une contre-dépouille (50, 51 ; 74 ; 104, 105) dans le pont d'étrier (12 ; 64 ; 94), et l'autre saillie (44 ; 84 ; 113, 114) présentant une autre surface de support (46 ; 89 ; 120, 121).

20. Garniture de frein selon la revendication 19, **caractérisée en ce que** l'on prévoit sur la région de tronc (42 ; 81 ; 111) une surface de support de tronc (47 ; 90 ; 122) qui, en coopérant avec les surfaces de support (45, 46 ; 88, 90 ; 120, 121) des saillies (43, 44 ; 83, 84 ; 113, 114), limite une possibilité de mouvement de la garniture de frein (37, 38 ; 80 ; 110) dans l'étrier de frein (8 ; 63 ; 93) dans la direction radiale (7) avec un jeu (S_{R}).

21. Garniture de frein selon la revendication 20, **caractérisée en ce que** la surface de support de tronc (47 ; 90 ; 122) est disposée dans l'évidement (39 ; 82 ; 112) de la garniture de frein (37, 38 ; 80 ; 110).

22. Garniture de frein selon l'une quelconque ou plusieurs des revendications précédentes, 17 à 21, **caractérisée en ce que** la saillie en forme de L (43 ; 83 ; 113) est réalisée par rapport à une direction de rotation principale (4) du disque de frein (2) exclusivement du côté de l'entrée sur la région de tronc (42 ; 81 ; 111) de la plaque arrière (40 ; 79 ; 119), de sorte que le flux de forces des forces périphériques se produise en traction depuis la plaque arrière (40 ; 79 ; 119) dans l'étrier de frein (8, 63 ; 93) par le biais de la surface d'appui (49 ; 86 ; 116) quand le disque de frein (2) tourne dans la direction de rotation principale (4), et se produise en poussée par le biais de la surface d'appui (48 ; 85 ; 115) quand le disque de frein (2) tourne dans le sens inverse de la direction de rotation principale (4).

23. Ensemble de garnitures de frein pour un frein à disque selon l'une quelconque ou plusieurs des revendications précédentes, **caractérisé en ce qu'**au moins deux garnitures de frein (37, 38), qui sont disposées dans la direction périphérique (5) l'une à côté de l'autre du même côté du disque de frein (2), sont réalisées de manière identique.
